# EUROPÄISCHE PATENTSCHRIFT

(11) **EP 4 370 877 B1**
(45) Veröffentlichungstag und Bekanntmachung des Hinweises auf die Patenterteilung: **12.11.2025**
(21) Anmeldenummer: 22738478.1
(22) Anmeldetag: 04.07.2022
(51) Int. Cl.: G01F 1/58, G01F 15/14

(54) **FELDGERÄT DER AUTOMATISIERUNGSTECHNIK**
FIELD DEVICE IN AUTOMATION ENGINEERING
DISPOSITIF DE TERRAIN DANS L'INGÉNIERIE D'AUTOMATISATION

(30) Priorität: 14.07.2021 DE 102021118129
(43) Veröffentlichungstag der Anmeldung: 22.05.2024
(73) Patentinhaber: Endress+Hauser Flowtec AG, 4153 Reinach (CH)
(72) Erfinder: VOIGT, Frank, 79576 Weil am Rhein (DE); ZIEGLER, Steffen, 79650 Schopfheim (DE)
(74) Vertreter: Endress + Hauser Group Services (Deutschland) AG+Co. KG
(86) Internationale Anmeldenummer: PCT/EP2022/068399
(87) Internationale Veröffentlichungsnummer: WO 2023/285182

(56) Entgegenhaltungen:
- EP-A1- 3 623 773
- DE-A1- 102005 003 332
- DE-A1- 102019 118 711

## Beschreibung

Die Erfindung betrifft ein Feldgerät der Automatisierungstechnik, insbesondere ein magnetisch-induktives Durchflussmessgerät.

In der Automatisierungstechnik, insbesondere in der Prozess-Automatisierungstechnik, werden vielfach Feldgeräte eingesetzt, die zur Erfassung und/oder Beeinflussung von Prozessvariablen dienen. Zur Erfassung von Prozessvariablen dienen Sensoren, die beispielsweise in Füllstandsmessgeräten, Durchflussmessgeräten, Druck- und Temperaturmessgeräten, pH-Redoxpotentialmessgeräten, Leitfähigkeitsmessgeräten, usw. integriert sind, welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein elektronische Messkomponenten verstanden, die auf der Feldebene angeordnet sind.

Ein Feldgerät ist dabei insbesondere ausgewählt aus einer Gruppe bestehend aus Durchflussmessgeräten, Füllstandsmessgeräten, Druckmessgeräten, Temperaturmessgeräten, Grenzstandsmessgeräten und/oder Analysemessgeräten.

Durchflussmessgeräte sind insbesondere Coriolis-, Ultraschall-, Vortex-, thermische und/oder magnetisch-induktive Durchflussmessgeräte.

Füllstandsmessgeräte sind insbesondere Radar-basierte Füllstandsmessgeräte, Mikrowellen-Füllstandsmessgeräte, Ultraschall-Füllstandsmessgeräte, zeitbereichsreflektometrische Füllstandsmessgeräte, radiometrische Füllstandsmessgeräte, kapazitive Füllstandsmessgeräte, induktive Füllstandsmessgeräte und/oder temperatursensitive Füllstandsmessgeräte.

Druckmessgeräte sind insbesondere Absolut-,Relativ- oder Differenzdruckgeräte.

Temperaturmessgeräte sind insbesondere Messgeräte mit Thermoelementen und/oder temperaturabhängigen Widerständen.

Grenzstandsmessgeräte sind insbesondere vibronische Grenzstandsmessgeräte, Ultraschall-Grenzstandsmessgeräte und/oder kapazitive Grenzstandsmessgeräte. Analysemessgeräte sind insbesondere pH-Sensoren, Leitfähigkeitssensoren, Sauerstoff- und Aktivsauerstoffsensoren, (spektro)-photometrische Sensoren, und/oder ionenselektive Elektroden.

Weiterhin werden zur Reduzierung der Herstellungskosten höhere Maß- und Formtoleranzen der einzelnen Bauteile in Kauf genommen. Dies führt dazu, dass bei der Montage der einzelnen Bauteile unerwünscht mechanische Spannungen in einzelnen Bauteilen erzeugt werden - die zu Fehlfunktionen oder Defekten führen - oder dass eine Dichtigkeit zwischen den jeweiligen Bauteilen nicht gewährleistet werden kann. Dichtverbindungen werden standardgemäß in Feldgeräten der Automatisierungstechnik eingesetzt, um das Eintreten von Feuchtigkeit oder von Verunreinigungen in das Gehäuseinnere zu vermeiden. Diese werden nach den betrieblichen Anforderungen ausgelegt und müssen in der Regel mindestens 10% von der Ausgangsgröße verpresst werden. Die dafür aufzubringenden Vorspannkräfte sind jedoch gerade für kaltumgeformte Bauteile, wie z.B. tiefgezogene Gehäuseformteilhälften zu hoch. Diese halten derartige Vorspannkräfte nicht stand und es kommt zu unerwünschten Verformungen, wodurch die Dichtigkeit lokal nicht gewährleistet werden kann.

Die DE 10 2019 118711 A1 beschreibt ein Feldgerät des Standes der Technik mit einem Gehäuse, welches an einer äußeren Mantelfläche eines Messrohres angeordnet ist.

Der Erfindung liegt die Aufgabe zugrunde den genannten Problemen Abhilfe zu schaffen. Die Aufgabe wird gelöst durch das Feldgerät der Automatisierungstechnik nach Anspruch 1.

Das erfindungsgemäße Feldgerät der Automatisierungstechnik umfasst:
- ein Messrohr zum Führen eines fließfähigen Mediums,
- ein Messanordnung zum Ermitteln einer physikalischen und/oder chemischen Messgröße des Mediums,

wobei die Messanordnung zumindest teilweise am Messrohr angeordnet ist,
   - ein Gehäuse zum Unterbringen von mindestens einer Elektronikkomponente zum Betreiben der Messanordnung Regeln einer Regelgröße der Messanordnung Ermitteln eines Messwertes der Messgröße und/oder Auswerten der Messgröße,
wobei das Gehäuse an einer äußeren Mantelfläche des Messrohres angeordnet ist und die Messanordnung zumindest teilweise verdeckt,
wobei das Gehäuse eine Gehäusewandung aufweist, die zusammen mit der äußeren Mantelfläche des Messrohres ein Gehäuseinneres begrenzt,
wobei die Gehäusewandung einen ersten Randabschnitt aufweist, der zumindest abschnittsweise in direkten Kontakt mit der äußeren Mantelfläche des Messrohres steht,
wobei der erste Randabschnitt zumindest abschnittsweise vom Gehäuseinneren weg gebogen ist,
   wobei zumindest der erste Randabschnitt kraftschlüssig mit dem Messrohr verspannt ist.

Vorteilhafte Ausgestaltung der Erfindung sind Gegenstand der Unteransprüche.

Erfindungsgemäß ist vorgesehen, dass der erste Randabschnitt frei von einer Biegung ist,
wobei der erste Randabschnitt zumindest in einem Längsschnitt durch das Feldgerät eine erste Randabschnittslängsachse A aufweist, welche die äußere Mantelfläche des Messrohres mit einen Winkel α schneidet,
wobei α ein Winkelmaß zwischen 1° und 10° bzw. 5° aufweist.

Das Gehäuse ist dabei derart am Messrohr montiert und befestigt, dass der erste Randabschnitt dabei verformt wird und zumindest abschnittsweise eine mechanische Spannung im Gehäuse zurückbleibt.

Eine Ausgestaltung sieht vor, dass das Gehäuse eine insbesondere kaltumgeformte erste Gehäuseformhälfte und eine insbesondere kaltumgeformte zweite Gehäuseformhälfte umfasst,
wobei die erste Gehäuseformhälfte und die zweite Gehäuseformhälfte diametral angeordnet sind und miteinander befestigt sind.

Eine Ausgestaltung sieht vor, dass die erste Gehäuseformhälfte und die zweite Gehäuseformteilhälfte jeweils einen zweiten Randabschnitt aufweisen,
wobei die zweiten Randabschnitte zumindest abschnittsweise miteinander in direktem Kontakt stehen,
wobei die Randabschnitte zumindest in einem Querschnitt durch das Feldgerät jeweils eine zweite Randabschnittslängsachse B aufweisen, welche eine Mittelebene mit einem Winkel β schneidet,
wobei der Winkel β ein Winkelmaß von 1° bis 10° bzw. 5°aufweist,
wobei die Mittelebene durch eine Längsachse des Messrohres und einer senkrecht dazu verlaufenden Querachse X aufgespannt ist,
wobei die Mittelebene durch mindestens einen Kontaktpunkt der zweiten Randabschnitte verläuft.

Eine Ausgestaltung sieht vor, dass die erste Gehäuseformteilhälfte im zweiten Randabschnitt mindestens eine Biegelasche zum Bilden einer formschlüssigen Verbindung mit der zweiten Gehäuseformteilhälfte aufweist,
wobei die mindestens eine Biegelasche umgebogen ist und mit dem zweiten Randabschnitt der in Kontakt stehenden zweiten Gehäuseformteilhälfte in Wirkung steht.

Es ist besonders vorteilhaft, wenn mindestens eine der Laschen nicht umgebogen ist und dazu eingerichtet und ausgebildet ist, mit einem Erdungskabel verbunden zu werden.

Eine Ausgestaltung sieht vor, dass der zweite Randabschnitt der ersten Gehäuseformteilhälfte eine zumindest abschnittsweise umlaufende Falz zum Begrenzen einer Verschiebung der zweiten Gehäuseformteilhälfte in eine Längsrichtung und/oder eine Querrichtung des Messrohres aufweist,
wobei die Falz in eine Ausnehmung im zweiten Randabschnitt der zweiten Gehäuseformteilhälfte greift.

Eine Ausgestaltung sieht vor, dass die mindestens eine Biegelasche monolithisch mit der Falz verbunden ist.

Eine Ausgestaltung sieht vor, dass das Gehäuse an der inneren Gehäusemantelfläche eine Sicke zum Versteifen der Gehäusewandung aufweist,
wobei zumindest abschnittsweise ein Dichtmittel in der Sicke angeordnet ist.

Eine Ausgestaltung sieht vor, dass die Messanordnung eine Vorrichtung zum Erzeugen eines das Messrohr durchdringenden Magnetfeldes und mindestens zwei Messelektroden zum Ermitteln einer im Medium induzierten Messspannung aufweist,
wobei die Vorrichtung zum Erzeugen des Magnetfeldes und die mindestens zwei Messelektroden zumindest teilweise an der äußeren Mantelfläche des Messrohres angeordnet sind.
Fig. 1: eine perspektivische Ansicht auf ein erfindungsgemäßes Feldgerät der Automatisierungstechnik;
Fig. 2: einen Querschnitt durch eine erste Formkörperhälfte mit angeordneter Elektronikkomponente;
Fig. 3: einen Längsschnitt durch ein magnetisch-induktives Durchflussmessgerät;
Fig. 4: einen Längsschnitt durch ein Radar-basiertes Füllstandsmessgerät;
Fig. 5: eine Ansicht von unten auf eine erste Formkörperhälfte;
Fig. 6: eine perspektivische Ansicht auf eine Zentrierungsvorrichtung;
Fig. 7A: eine perspektivische Ansicht auf ein teilweise geschnittenes Gehäuse mit einer ersten Formkörperhälfte;
Fig. 7B: einen Ausschnitt aus einem Querschnitt durch Gehäuse mit angeordneter und fixierten ersten Formkörperhälfte;
Fig. 8: einen Ausschnitt eines Randbereiches einer ersten Gehäuseformteilhälfte in Kontakt mit einem Messrohr;
Fig. 9: einen Ausschnitt eines Randbereiches einer ersten Gehäuseformteilhälfte in Kontakt mit einem Messrohr;
Fig. 10: einen Ausschnitt eines Randbereiches einer ersten Gehäuseformteilhälfte in Kontakt mit einer zweiten Gehäuseformteilhälfte; und
Fig. 11: eine perspektives Ansicht auf eine geschnittene Darstellung eines Dichtungssitzes zwischen der ersten Gehäuseformteilhälfte und der zweiten Gehäuseformteilhälfte.

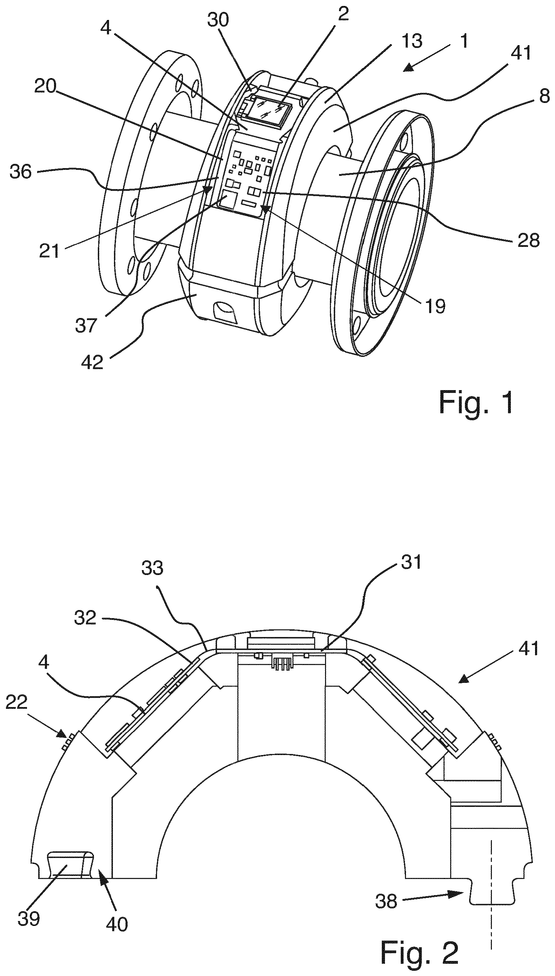

Fig. 1 zeigt eine perspektivische Ansicht auf ein erfindungsgemäßes Feldgerät der Automatisierungstechnik 1. Das Feldgerät der Automatisierungstechnik 1 umfasst ein Messrohr 8 zum Führen eines fließfähigen Mediums und eine durch den Formkörper 13 verdeckte Messanordnung zum Ermitteln einer physikalischen und/oder chemischen Messgröße des Mediums, die am Messrohr 8 angeordnet ist. Die Messanordnung kann beispielsweise ein thermischen Sensor umfassend zwei Temperatursonden oder zwei insbesondere mediumsberührende Messelektroden zum Abgreifen einer in einem fließfähigen Medium induzierten Messspannung in Verbindung mit einer magnetfelderzeugenden Vorrichtung sein. Es sind ein Vielzahl an weiterer Messanordnungen bekannt, die allesamt für das erfindungsgemäße Feldgerät der Automatisierungstechnik 1 geeignet sind. Beispiele dafür sind die Messanordnungen der einleitend genannten Messgeräte. Weiterhin umfasst das Feldgerät der Automatisierungstechnik 1 ein am Messrohr 8 angeordnetes Gehäuse zum Unterbringen von mindestens einer Elektronikkomponente 4 zum Betreiben der Messanordnung, Regeln einer Regelgröße der Messanordnung, Ermitteln eines Messwertes der Messgröße und/oder Auswerten der Messgröße der Messanordnung. Die Fig. 1 zeigt das Gehäuse nicht, um den am Messrohr 8 angeordneten, zweiteiligen Formkörper 13 sichtbar zu machen, welcher im fertig montierten Zustand im Gehäuse angeordnet und durch diesen bzw. durch dessen Gehäusewandung ganz oder zumindest teilweise verdeckt ist. Der Formkörper 13 dient zum Befestigen bzw. Halten der Elektronikkomponente 4 und weist zumindest in einem ersten Abschnitt 21 ein Thermoplast und/oder ein Elastomer auf. Der erste Abschnitt 21 befindet sich an einer äußeren Formkörpermantelfläche. In einer vorteilhafteren Ausgestaltung weist das Thermoplast ein expandiertes Polypropylen auf, wobei das expandierte Polypropylen eine Dichte *ρ* mit 30 ≤ *ρ* ≤ 90 g/l und bevorzugt 45 ≤ *ρ* ≤ 80 g/l aufweist. Expandiertes Polypropylen mit der erfindungsgemäßen Dichte weist ein reduziertes elektrostatisches Aufladen des Formkörpers 13 bei der Montage des Formkörpers 13 im Gehäuse oder am Messrohr auf. Der Formkörper 13 ist aus einer monolithischen ersten Formkörperhälfte 41 und einer in diesem Fall identischen und ebenfalls monolithischen zweite Formkörperhälfte 42 gebildet. Dabei ist die erste Formkörperhälfte 41 mit der zweiten Formkörperhälfte 42 zumindest formschlüssig verbunden. Zusammen umschließen die erste Formkörperhälfte 41 und die zweite Formkörperhälfte 42 das Messrohr 8 mindestens in einem Messrohrquerschnitt.

Der erster Abschnitt 21 ist elastisch ausgebildet und weist eine Aufnahme 19 zum Unterbringen einer Elektronikkomponente 4 auf. Die Aufnahme 19 weist mindestens eine Hinterschneidung 20 auf. Die Aufnahme 19 kann als durchgehende Öffnung oder als Vertiefung bzw. Sackloch ausgebildet sein. Die Hinterschneidung 20 kann die Form von einer Rastnase 30 oder mehrerer Rastnasen annehmen und/oder als Führungsschiene 36 ausgebildet sein, in der die Elektronikkomponente 4 einführbar bzw. eingeführt ist. Die Führungsschiene 36 ist als länglicher Schlitz im Formkörper 13 oder als aus einem Grundkörper des Formkörpers 13 hervorstehender Steg ausgebildet. In der Aufnahme 19 ist eine Elektronikkomponente 4 form- und/oder kraftschlüssig angeordnet, so dass sie gehalten und bei der Montage des Formkörpers 13 am Messrohr 8 und/oder am Gehäuse nicht herausfallen kann. Weitere C-Teile zum Befestigen können vorgesehen werden, sind aber nicht notwendig. Die Elektronikkomponente 4 ist durch den ersten Abschnitt 21 bzw. durch die Hinterschneidung 20 in Form von vier Rastnasen 30 und einer im Formkörper integralen Führungsschiene 36 gehalten. Weiterhin weist der Formkörper 13 zumindest im ersten Abschnitt 21 einen Druckverformungsrest *DVR* nach ISO 1798 von 0 ≤ *DVR* ≤ 20 %, insbesondere 5 ≤ *DVR* ≤ 15 % und bevorzugt *DVR* < 15 % auf. Da der Formkörper 13 während der Montage im ersten Abschnitt 21 zumindest abschnittsweise verformt wird, um die Elektronikkomponente 4 in der Aufnahme 19 anzuordnen und zu befestigen, ist es essenziell, dass der Druckverformungsrest *DVR* des Formkörpers 13 nicht größer als 20% ist. Um mechanische Spannungen auf die Elektronikkomponente 4 möglichst gering zu halten ist es weiterhin vorteilhaft, wenn der *DVR* größer/gleich 5% ist. Zudem weist der Formkörper 13 zumindest im ersten Abschnitt 21 eine Reißdehnung nach ISO 1798 von 10 bis 20% und bevorzugt von 14 bis 16% auf. Alternativ können die notwendigen mechanischen Eigenschaften des Formkörpers 13 auch durch die Zugfestigkeit beschrieben werden. Dabei weist der Formkörper 13 zumindest im ersten Abschnitt 21 eine Zugfestigkeit nach ISO 1798 von 400 bis 1300 kPa, insbesondere 600 bis 1000 kPa und bevorzugt von 700 bis 880 kPa auf.

Die Elektronikkomponente 4 umfasst eine Leiterplatte 28, auf der elektronische Bauteile 37 zum Betreiben der Messanordnung, Regeln der Regelgröße der Messanordnung und/oder Auswerten der Messgröße der Messanordnung angeordnet sind. Zu den elektronischen Bauteilen 37 zählen beispielsweise Prozessoren, elektromechanische Bauelemente - wie Schalter oder Relais - sowie passive Bauelemente wie Widerstände, Kondensatoren und/oder induktive Bauelemente und/oder aktive Bauelemente wie Dioden, Transistoren und/oder integrierte Schaltkreise. Zudem ist ein Display 2 auf einem ersten Leiterplattenabschnitt angeordnet zum Anzeigen von Messwerten der Messgröße, Prozesseigenschaften und/oder Feldgerät-spezifische Systeminformationen. Die Elektronikkomponente 4 kann weiterhin Verbindungskabel mit denen die Spulen mit der Betriebsschaltung verbunden sind umfassen. Diese können in eigens dafür vorgesehenen Nuten verlaufen und dort befestigt sein.

Fig. 2 zeigt einen Querschnitt durch die erste Formkörperhälfte 41 des Formkörpers der Fig. 1 mit angeordneter Elektronikkomponente 4. Die abgebildete Elektronikkomponente 4 umfasst eine Leiterplatte, welche elektronische Bauteile zum Betreiben der Messanordnung, Regeln der Regelgröße der Messanordnung und/oder Auswerten der Messgröße der Messanordnung aufweist. Die Leiterplatte weist einen starren ersten Leiterplattenabschnitt 31 und einen starren zweiten Leiterplattenabschnitt 32 auf, welche voneinander getrennt sind. Zudem weist die Leiterplatte einen flexiblen dritten Leiterplattenabschnitt 33 auf, über welche die Trennung der ersten Leiterplattenabschnitt 31 von der zweiten Leiterplattenabschnitt 32 realisiert ist. Das in Fig. 2 nicht abgebildete Gehäuse weist eine innere Gehäusemantelfläche auf, welche nach der Montage mit der abgebildeten ersten Formkörperhälfte 41 zumindest stellenweise bzw. über mindestens einen elastisch ausgebildeten zweiten Abschnitt 22 in mechanischen Kontakt steht. Der zweite Abschnitt 22 weist mindestens eine Auskragung 26 auf, die in Falle der abgebildeten Ausgestaltung als eine Vielzahl von hervorstehenden Rippen realisiert ist. Die mindestens eine Auskragung 26 ist derart ausgebildet, dass diese bei Montage der ersten Formkörperhälfte 41 in eine ersten Gehäuseformteilhälfte komprimiert oder verdrängt wird. Dies hat den Zweck Fertigungstoleranzen der erste Formkörperhälfte 41, der ersten Gehäuseformteilhälfte 51 und/oder des Messrohres zu kompensieren. Der zweite Abschnitt 22 weist ebenfalls wie der erste Abschnitt 21 ein Thermoplast auf in Form eines expandierten Polypropylens. Die erste Formkörperhälfte 41 weist im zweiten Abschnitt 22 einen Druckverformungsrest *DVR* nach ISO 1798 von 0 ≤ *DVR* ≤ 20 %, insbesondere 5 ≤ *DVR* ≤ 15 % und bevorzugt *DVR <* 15 % auf. Weiterhin weist die erste Formkörperhälfte 41 im zweiten Abschnitt 22 eine Reißdehnung nach ISO 1798 von 10 bis 20% und bevorzugt von 14 bis 16% auf. Eine weitere charakteristische mechanische Größe der ersten Formkörperhälfte 41 ist die Zugfestigkeit. Diese liegt im zweiten Abschnitt 22 bei 400 bis 1300 kPa, insbesondere 600 bis 1000 kPa und bevorzugt von 700 bis 880 kPa nach ISO 1798.

Weiterhin weist die erste Formkörperhälfte 41 einen Vorsprung 38 mit einer Vorsprungslängsachse auf, die in dem Querschnitt der ersten Formkörperhälfte 41 liegt. Einen Querschnittsfläche des Vorsprungs 38 nimmt zumindest abschnittsweise entlang der Vorsprungslängsachse, insbesondere in Richtung einer in einer (nicht abgebildeten) zweiten Formkörperhälfte befindlichen zum Vorsprung 38 komplementären Aufnahme zu. Der Vorsprung 38 ist in die Aufnahme einsteckbar, wodurch ein formschlüssiger Verschluss bildbar ist. Gemäß der abgebildeten Ausgestaltung weist auch die erste Formkörperhälfte 41 eine komplementär zu einem Vorsprung der zweiten Formkörperhälfte ausgebildete Aufnahme 39 auf in Form einer Öffnung. Die Aufnahme 39 ist in einem vierten Abschnitt 40 der ersten Formkörperhälfte 41 angeordnet, welcher elastisch ausgebildet ist. Dies erlaubt es den vierten Abschnitt 40 zu verformen, um den Vorsprung der zweiten Formkörperhälfte bein Montieren aufzunehmen und die beiden Formkörperhälften 41, 42 miteinander formschlüssig zu verbinden um somit eine ausreichende Fixierung dieser am Messrohr zu realisieren.

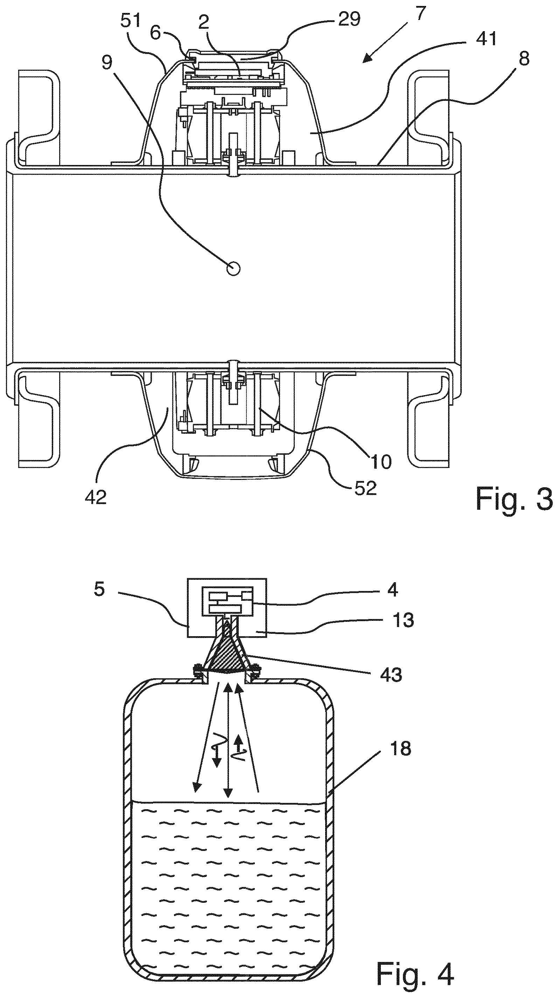

Fig. 3 zeigt einen Längsschnitt durch ein magnetisch-induktives Durchflussmessgerät 7 als Beispiel für ein erfindungsgemäßes Feldgerät der Automatisierungstechnik. Das magnetisch-induktive Durchflussmessgerät 7 umfasst ein Messrohr 8 zum Führen eines fließfähigen Mediums und zwei endständige Prozessanschlüsse. Das Messrohr 8 ist ein längsgeschweißtes Stahlrohr mit einem auf einer innenseitigen Mantelfläche aufgebrachten, elektrisch isolierenden Liner. Die Messanordnung des magnetischinduktiven Durchflussmessgerätes umfasst eine Vorrichtung 9 zum Messen einer induzierten Messspannung im fließenden Medium, insbesondere mindestens zwei diametral angeordnete Messelektroden, die mediumsberührend in jeweils einer vorgesehenen Öffnung in der Rohrwandung des Messrohres 8 mediumsdicht eingesetzt und fixiert sind. Weiterhin umfasst die Messanordnung eine Vorrichtung 10 zum Erzeugen eines das Messrohr 8 durchdringenden Magnetfeldes, bestehend aus mindestens zwei diametral angeordnete Spulen, die dazu eingerichtet sind ein Magnetfeld mit einer Magnetfeldhauptachse zu erzeugen, die im Wesentlichen senkrecht zu einer die beiden Messelektroden verbindenden Messelektrodenachse und einer Längsachse des Messrohres 8 verläuft. Ebenfalls am Messrohr 8 angeordnet sind eine Füllstandsüberwachungselektrode und eine Referenzelektrode.

Die Elektronikkomponente 4 mit der auf der Leiterplatte angeordneten Messschaltung, Betriebsschaltung und/oder Regelschaltung ist in einem kaltgeformten Gehäuse 5 untergebracht. Das Gehäuse 5 umfasst eine insbesondere kaltumgeformte erste Gehäuseformteilhälfte 51, welche mit einer insbesondere kaltumgeformten zweiten Gehäuseformteilhälfte 52 verbunden ist und die diametral zueinander angeordnet sind. Das Gehäuse 5 weist eine Öffnung 6 auf, in die ein zumindest abschnittsweise transparentes Displayglas 29 angeordnet ist. Eine Leiterplatte weist ein auf dem ersten Leiterplattenabschnitt angeordnetes Display 2 auf, welches durch das Displayglas 29 einsehbar ist. Eine äußere Mantelfläche des Messrohres 8 und die erste Formkörperhälfte 41, sowie die zweite Formkörperhälfte 42 begrenzen jeweils einen Hohlraum in dem die Spulen der Vorrichtung 10 zum Erzeugen des Magnetfeldes angeordnet sind.

Fig. 4 zeigt eine schematische Darstellung eines Längsschnittes durch ein Radar-basiertes Füllstandsmessgerät 43 als weiteres Beispiel für ein Feldgerät der Automatisierungstechnik. Zur Füllstandsmessung von Füllgütern in Behältern 18 haben sich Radar-basierte Messverfahren etabliert, da sie robust und wartungsarm sind. Ein zentraler Vorteil Radar-basierter Messverfahren besteht in der Fähigkeit, den Füllstand quasi kontinuierlich messen zu können. Im Kontext dieser Patentanmeldung bezieht sich der Begriff "Radar" auf Radar-Signale mit Frequenzen zwischen 0.03 GHz und 300 GHz. Übliche Frequenzbänder, bei denen Füllstandsmessung durchgeführt wird, liegen bei 2 GHz, 26 GHz, 79 GHz, oder 120 GHz. Die beiden gängigen Messprinzipien bilden hierbei das Puls-Laufzeit-Prinzip (auch unter dem Begriff "Pulsradar" bekannt) sowie das FMCW-Prinzip ("Frequency Modulated Continuous Wave"). Ein Füllstandsmessgerät, welches nach dem Puls-Laufzeit-Verfahren arbeitet, ist beispielsweise in der Offenlegungsschrift DE 10 2012 104 858 A1 beschrieben. Bezüglich eines typischen Aufbaus von FMCWbasierten Füllstandsmessgeräten sei exemplarisch auf die Offenlegungsschrift DE 10 2013 108 490 A1 verwiesen. Näher beschrieben werden die Messprinzipien von FMCW und Pulsradar außerdem in "Radar Level Detection, Peter Devine, 2000". Das Radar-basiertes Füllstandsmessgerät 43 weist ebenfalls ein Gehäuse 5 auf mit einem darin angeordneten Formkörper 13. Der Formkörper 13 weist einen ersten Abschnitt mit einer Aufnahme auf, in der eine Elektronikkomponente 4 angeordnet ist. Die Eigenschaften des ersten Abschnitts sind identisch mit denen des in Fig. 1 und Fig. 2 gezeigten und beschriebenen Feldgerätes der Automatisierungstechnik.

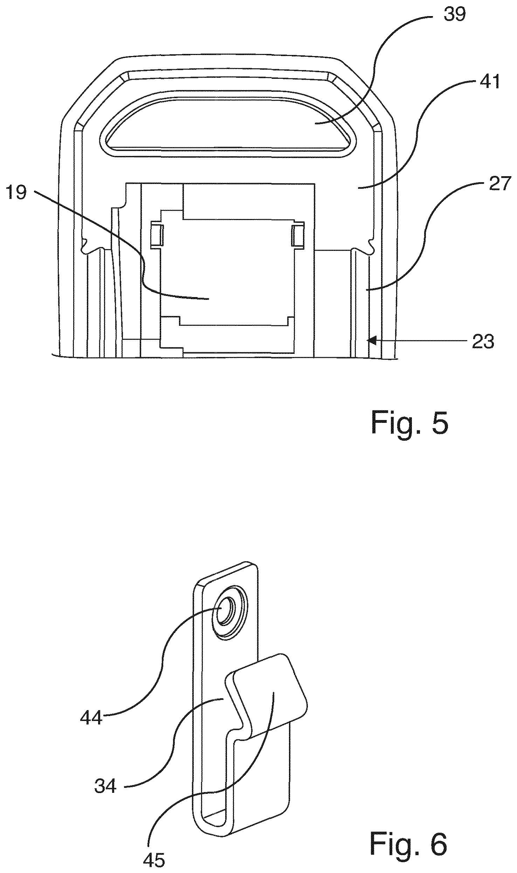

Fig. 5 zeigt eine Ansicht von unten auf die erste Formkörperhälfte 41 aus Fig. 2. Zu sehen ist die Aufnahme 19 zum Aufnehmer der Elektronikkomponente. Die Aufnahme 19 ist als durchgehende Öffnung ausgebildet. Weiterhin ist die Aufnahme 39 zum Aufnehmen eines Vorsprungs zum Bilden einer kraft- und/oder formschlüssigen Verbindung zu sehen. Weiterhin ist ein dritter Abschnitt 23 zu erkennen, der elastisch ausgebildet ist. Der dritte Abschnitt 23 weist eine Auskragung 27 auf, die in mechanischem Kontakt mit einer äußeren Mantelfläche eines Messrohres oder eines Behälters anzuordnen ist und die zumindest als teilweise um den Umfang des Messrohres oder des Behälters verlaufende Dichtlippe ausgebildet ist. Die Auskragung 27 ist derart ausgebildet, dass beim Anordnen der ersten Formkörperhälfte 41 an das Messrohr oder an den Behälter die Auskragung 27 verdrängt oder gestaucht wird. Somit lassen sich Fertigungstoleranzen kompensieren und mechanischer Stress und/oder Undichtigkeiten reduzieren. Der dritte Abschnitt 23 ist ebenfalls ein Thermoplast und/oder ein Elastomer, bzw. in einer bevorzugten Ausgestaltung ein expandiertes Polypropylen, welches einen Druckverformungsrest *DVR* nach ISO 1798 von 0 ≤ *DVR* ≤ 20 %, insbesondere 5 ≤ *DVR* ≤ 15 % und bevorzugt *DVR* < 15 % aufweist. Weiterhin ist der dritte Abschnitt 23, insbesondere die Auskragung 27 derart ausgebildet, dass eine Reißdehnung nach ISO 1798 von 10 bis 20% und bevorzugt von 14 bis 16% und/oder eine Zugfestigkeit nach ISO 1798 von 400 bis 1300 kPa, insbesondere 600 bis 1000 kPa und bevorzugt von 700 bis 880 kPa vorliegt.

Fig. 6 zeigt eine perspektivische Ansicht auf eine Zentrierungsvorrichtung 34 zum Blockieren eines tangentialen Verschiebens der Formkörperhälfte in der Gehäuseformteilhälfte und/oder an der äußeren Mantelfläche des Messrohres. Die Zentrierungsvorrichtung 34 weist eine Sicke 44 auf über welche diese mit der inneren Gehäusemantelfläche der Gehäuseformteilhälfte stoffschlüssig verbunden werden kann. Weiterhin weist die Zentrierungsvorrichtung 34 an einem Ende einen Haken 45 auf, der zum Einrasten in eine Aufnahme in der Formkörperhälfte und sich dort Ineinandergreifen vorgesehen ist und somit zum Bilden einer form- und/oder kraftschlüssigen Verbindung zwischen Formkörperhälfte und Gehäuseformteilhälfte geeignet ist. Die Zentrierungsvorrichtung 34 ist als dünnes gebogenes Blechteil ausgebildet, das zumindest derart federnd ausgebildet ist, dass beim Einführen der Formkörperhälfte in die Gehäuseformteilhälfte in einer Montagerichtung, der Haken 45 zumindest abschnittsweise von der inneren Gehäusemantelfläche der Gehäuseformteilhälfte weg verdrängbar ist.

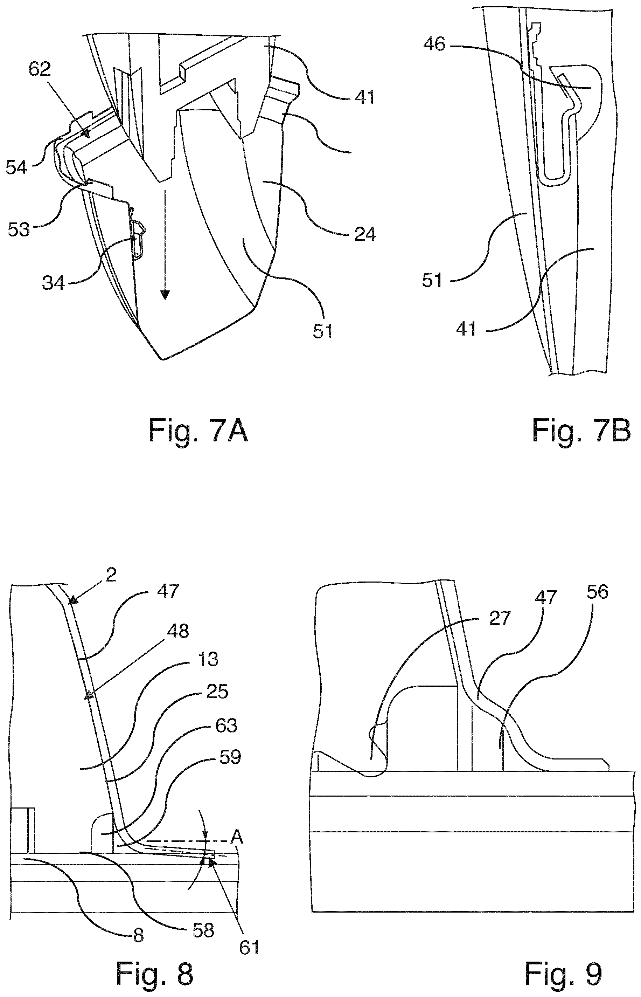

Fig. 7A zeigt eine perspektivische Ansicht auf eine teilweise geschnittene Gehäuseformteilhälfte 51 mit einer in eine lineare Montagerichtung (siehe Pfeil) einzuführenden ersten Formkörperhälfte 41. An der inneren Gehäusemantelfläche 24 der ersten Gehäuseformteilhälfte 51 ist die Zentrierungsvorrichtung 34 mittels Fügeverfahren, insbesondere Schweißen stoffschlüssig angebracht. Die erste Gehäuseformteilhälfte 51 weist im zweiten Randabschnitt 62 mindestens eine Biegelasche 53 zum Bilden einer formschlüssigen Verbindung mit der (nicht abgebildeten) zweiten Gehäuseformteilhälfte 52 auf. Zur Bildung der Verbindung wird die mindestens eine Biegelasche 53 so umgebogen, dass sie mit dem zweiten Randabschnitt der in Kontakt stehenden zweiten Gehäuseformteilhälfte so in Wirkung steht, dass sich die beiden Gehäuseformteilhälften nicht mehr voneinander trennbar lassen, ohne dass eines der beiden Gehäuseformteilhälften plastisch umgeformt werden muss. Weiterhin umfasst der zweite Randabschnitt 62 der ersten Gehäuseformteilhälfte 51 eine zumindest abschnittsweise umlaufende Falz 54 zum Begrenzen einer Verschiebung der zweiten Gehäuseformteilhälfte in eine Längsrichtung und/oder eine Querrichtung des Messrohres beim Montieren der beiden Gehäuseformteilhälften d.h. wenn beide Gehäuseformteilhälften zusammengesetzt, aber die Biegelaschen noch nicht umgebogen sind. Die Falz 54 greift zudem in eine Ausnehmung im zweiten Randabschnitt der zweiten Gehäuseformteilhälfte. Die Ausnehmung kann als Öffnung im zweiten Randabschnitt der zweiten Gehäuseformteilhälfte ausgebildet sein oder durch einen im Vergleich zum zweiten Randabschnitt der ersten Gehäuseformteilhälfte verkürzten zweiten Randabschnitt der zweiten Gehäuseformteilhälfte ausgebildet sein. Dadurch lassen sich die beiden Gehäuseformteilhälften bei der Montage genauer zueinander zentrieren. Die mindestens eine Biegelasche 53 ist zumindest abschnittsweise monolithisch mit der Falz 54 verbunden.

Fig. 7B zeigt einen Ausschnitt aus einem Querschnitt durch erste Gehäuseformteilhälfte 51 der Fig. 7A mit in finaler Montageposition angeordneten und fixierten ersten Formkörperhälfte 41. Die erste Formkörperhälfte 41 weist eine Aufnahme 46 in Verbindung mit einer Hinterschneidung auf, in welche der Haken 45 der Zentrierungsvorrichtung eingreift.

Fig. 8 zeigt einen Ausschnitt einer ersten Ausgestaltung eines Randbereiches einer ersten Gehäuseformteilhälfte in Kontakt mit einer äußeren Mantelfläche eines Messrohres. Das abgebildete Gehäuse 2 weist eine Gehäusewandung 47 auf, die zusammen mit der äußeren Mantelfläche 25 des Messrohres 8 ein Gehäuseinneres 48 begrenzt. Die Gehäusewandung 47 weist einen ersten Randabschnitt 61 aufweist, der zumindest abschnittsweise in direkten Kontakt mit der äußeren Mantelfläche 25 des Messrohres 8 steht und zumindest abschnittsweise vom Gehäuseinneren 48 weg gebogen ist. Erfindungsgemäß ist zumindest der erste Randabschnitt 61 mit dem Messrohr 8 verspannt. Das heißt, dass das Gehäuse derart am Messrohr montiert und befestigt wird, dass der erste Randabschnitt 61 dabei verformt wird und zumindest abschnittsweise eine mechanisch Spannung im Gehäuse zurückbleibt.

Der erste Randabschnitt 61 ist zumindest in einem Längsschnitt frei von einer Biegung. Eine Sicke in der Gehäusewandung beispielsweise zählt somit nicht zum erfindungsgemäßen ersten Randabschnitt 61. Weiterhin weist der erste Randabschnitt 61 in dem Längsschnitt durch das Feldgerät eine erste Randabschnittslängsachse A (gestrichelt) auf, welche die äußere Mantelfläche 25 des Messrohres 8 mit einem Winkel *α* schneidet, wobei α ein Winkelmaß zwischen 1° und 10° bzw. 5°aufweist. Als Referenz zur Randabschnittslängsachse A ist eine durgezogene Linie abgebildet, die für eine Längsachse des Messrohres steht.

Der Formkörper 13 ist im Gehäuseinneren 48 angeordnet und weist eine äußere Formkörpermantelfläche 25 auf. In der Ausgestaltung der Fig. 8 begrenzen die äußere Formkörpermantelfläche 25, die Gehäusewandung 47 und die äußere Mantelfläche 58 einen Dichtungssitz 59 begrenzen für ein insbesondere flüssig appliziertes Dichtmittel (nicht abgebildet). Der Formkörper 13 weist zudem eine Vertiefung 63 zur Bildung des Dichtungssitzes 59 auf, der zumindest abschnittsweise keilförmig ausgebildet ist. Das Dichtmittel umfasst zumindest anteilig ein Polyurethan, ein Polysiloxan, ein Polethylen und/oder ein Epoxidharz. Der Formkörper 13 zumindest teilweise aus einem Partikelschaum gebildet ist, umfassend mindestens ein Polystyrol, ein Polyphenylensulfid, ein expandiertes Polypropylen und ein Polyurethan.

Fig. 9 zeigt einen Ausschnitt einer zweiten Ausgestaltung eines Randbereiches einer ersten Gehäuseformteilhälfte in Kontakt mit einer äußeren Mantelfläche eines Messrohres. Der Unterschied zur Ausgestaltung der Fig. 8 ist, dass die Gehäusewandung 47 an einer inneren Gehäusemantelfläche eine Sicke 56 zum Versteifen der Gehäusewandung 47 aufweist, die zusätzlich zur Versteifung auch als Dichtsitz dient, so dass zumindest abschnittsweise ein Dichtmittel (nicht abgebildet) in der Sicke 56 angeordnet ist. Weiterhin zeigt die Fig. 9 eine Auskragung 27, die in mechanischem Kontakt mit einer äußeren Mantelfläche des Messrohres steht und die zumindest als teilweise um den Umfang des Messrohres oder des Behälters verlaufende Dichtlippe ausgebildet ist.

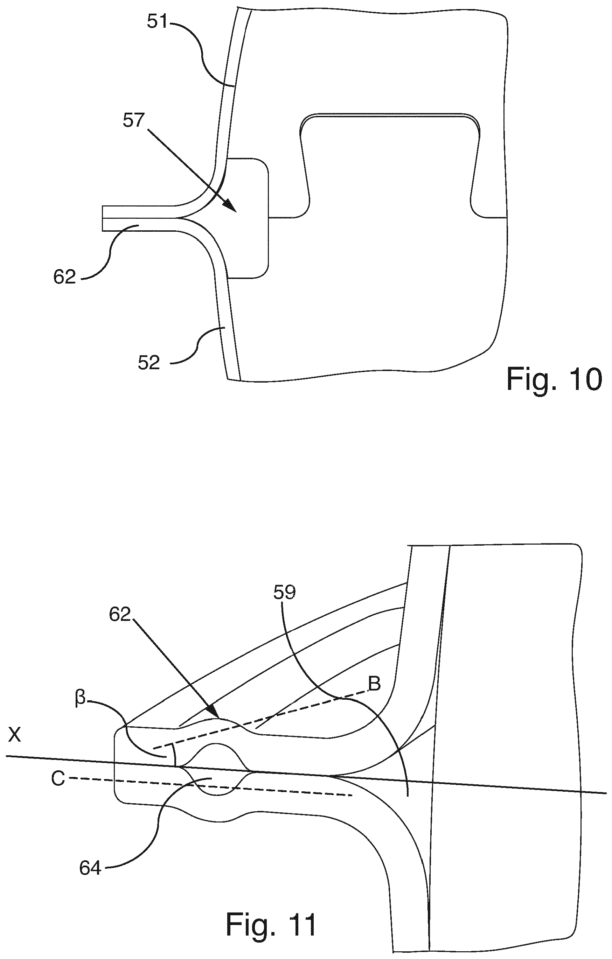

Fig. 10 zeigt einen Ausschnitt eines Randbereiches einer ersten Gehäuseformteilhälfte 51 in Kontakt mit einer zweiten Gehäuseformteilhälfte 52. Die erste Gehäuseformteilhälfte 51 und die zweite Gehäuseformteilhälfte 52 weisen jeweils einen zweiten Randabschnitt 62 auf, über den sie zumindest abschnittsweise miteinander in direktem Kontakt stehen. Die erste Gehäuseformteilhälfte 51 und die zweite Gehäuseformteilhälfte 52 sind miteinander über Biegelaschen (nicht abgebildet) form- und/oder kraftschlüssig und über das flüssig applizierte Dichtmittel 57 zusätzlich stoffschlüssig verbunden. Das Dichtmittel 57 ist in einem durch im gegenseitigen Kontakt stehenden zweiten Randabschnitte 62 gebildeten Dichtungssitz 59 angeordnet, welcher durch die zwei Gehäuseformteilhälften zumindest in radialer Richtung des Messrohres 8 begrenzt wird. Der Dichtsitz 59 ist zumindest abschnittsweise keilförmig ausgebildet.

Fig. 11 zeigt eine perspektives Ansicht auf eine geschnittene Darstellung eines Dichtungssitzes zwischen der ersten Gehäuseformteilhälfte und der zweiten Gehäuseformteilhälfte. Die Fig. 11 unterscheidet sich von der Fig. 10 im Wesentlichen dadurch, dass zusätzlich zum Dichtsitz 59 die zwei zweite Randabschnitte 62 zusammen ein Auffangvolumen 64 zum Aufnehmen von in Expansionsrichtung verdrängtes Dichtmittel (nicht abgebildet) begrenzen. Dies ist dadurch realisiert, dass ein Teilabschnitt des zweiten Randabschnittes 62 gebogen ist wodurch die nach der Montage im gegenseitigen Kontakt stehenden zweite Randabschnitte 62 das Auffangvolumen 64 zudem zusätzlich in Richtung des Messrohres begrenzen. Alternativ kann das als Auffangvolumen 64 vorgesehene Volumen die Funktion des Dichtsitzes übernehmen, d.h. dass in einem der gebogenen Teilabschnitte das Dichtmittel flüssig appliziert wird und dass beim Verspannen und Befestigen der zwei Gehäuseformteilhälften das überschüssige Dichtmittel in Richtung des in dieser Ausgestaltung als Dichtungssitz 59 gekennzeichnete Volumen verdrängt wird und der Dichtungssitz 59 somit die Funktion des Auffangvolumens übernimmt.

Die abgebildeten zweiten Randabschnitte 62 weisen zumindest in einem Querschnitt durch das Feldgerät jeweils eine zweite Randabschnittslängsachse C (gepunktet) aufweisen, die parallel zu einer Achse X (durchgezogen) verläuft, die in einer Mittelebene liegt. Dabei wird die Mittelebene durch eine Längsachse des Messrohres und einer senkrecht dazu verlaufenden Querachse aufgespannt. Sie verläuft durch mindestens einen Kontaktpunkt der erste Gehäuseformteilhälfte und der zweiten Gehäuseformteilhälfte, insbesondere durch die Kontaktpunkte der zweiten Randabschnitte 62.

Gemäß einer vorteilhaften Ausgestaltung sind die zweiten Randabschnitte 62 derart ausgebildet, dass sie eine zweite Randabschnittslängsachse B (gestrichelt) aufweisen, welche die Mittelebene mit einem Winkel β schneidet, wobei β ein Winkelmaß von 1° bis 10° bzw. 5° aufweist. Die alternative zweite Randabschnittslängsachse B ist ebenfalls in der Fig. 11 abgebildet. Alternativ kann die zweite Randabschnittslängsachse B nach dem Verspannen und Verbinden der zwei Gehäuseformteilhälften in die zweite Randabschnittslängsachse C übergehen.

### Bezugszeichenliste

Feldgerät der Automatisierungstechnik 1
Display 2
Messanordnung 3
Elektronikkomponente 4
Gehäuse 5
Öffnung 6
magnetisch-induktives Durchflussmessgerät 7
Messrohr 8
Vorrichtung 9 zum Messen einer induzierten Messspannung
Vorrichtung 10 zum Erzeugen des Magnetfeldes
Formkörper 13
Behälter 18
Aufnahme 19
Hinterschneidung 20
erste Abschnitt 21
zweite Abschnitt 22
dritte Abschnitt 23
innere Gehäusemantelfläche 24
äußere Formkörpermantelfläche 25
Auskragung 26
Auskragung 27
Leiterplatte 28
Displayglas 29
Rastnase 30
erste Leiterplattenabschnitt 31
zweite Leiterplattenabschnitt 32
dritte Leiterplattenabschnitt 33
Zentrierungsvorrichtung 34
Hinterschneidung 35
Führungsschiene 36
elektronische Bauteile 37
Vorsprung 38
Aufnahme 39
vierte Abschnitt 40
erste Formkörperhälfte 41
zweite Formkörperhälfte 42
Radar-basiertes Füllstandsmessgerät 43
Sicke 44
Haken 45
Aufnahme 46
Gehäusewandung 47
Gehäuseinneres 48
erste Gehäuseformteilhälfte 51
zweite Gehäuseformteilhälfte 52
Biegelasche 53
Falz 54
Ausnehmung 55
Sicke 56
Dichtmittel 57
äußere Messrohrmantelfläche 58
Dichtungssitz 59
Dichtmittel 60
erste Randabschnitt 61
zweite Randabschnitt 62
Vertiefung 63
Auffangvolumen 64

## Patentansprüche

1. Feldgerät der Automatisierungstechnik (1), umfassend:
- ein Messrohr (8) zum Führen eines fließfähigen Mediums,
- ein Messanordnung (3) zum Ermitteln einer physikalischen und/oder chemischen Messgröße des Mediums,
wobei die Messanordnung (3) zumindest teilweise am Messrohr (8) angeordnet ist,
- ein Gehäuse (5) zum Unterbringen von mindestens einer Elektronikkomponente (4) zum Betreiben der Messanordnung (3), Regeln einer Regelgröße der Messanordnung (3), Ermitteln eines Messwertes der Messgröße und/oder Auswerten der Messgröße,
wobei das Gehäuse (5) an einer äußeren Mantelfläche (58) des Messrohres (8) angeordnet ist und die Messanordnung (3) zumindest teilweise verdeckt,
wobei das Gehäuse (5) eine Gehäusewandung (47) aufweist, die zusammen mit der äußeren Mantelfläche (58) des Messrohres (8) ein Gehäuseinneres (48) begrenzt,
wobei die Gehäusewandung (47) einen ersten Randabschnitt (61) aufweist, der zumindest abschnittsweise in direkten Kontakt mit der äußeren Mantelfläche (58) des Messrohres (8) steht,
wobei der erste Randabschnitt (61) zumindest abschnittsweise vom Gehäuseinneren (48) weg gebogen ist,
wobei der erste Randabschnitt (61) frei von einer Biegung ist,
**dadurch gekennzeichnet, dass** zumindest der erste Randabschnitt (61) kraftschlüssig mit dem Messrohr (8) verspannt ist,
wobei der erste Randabschnitt (61) zumindest in einem Längsschnitt durch das Feldgerät (1) eine erste Randabschnittslängsachse A aufweist, welche die äußere Mantelfläche (58) des Messrohres (8) mit einen Winkel *α* schneidet,
wobei *α* ein Winkelmaß zwischen 1° und 10° aufweist,
und wobei das Gehäuse (5) derart am Messrohr (8) montiert und befestigt wird, dass der erste Randabschnitt (61) dabei verformt wird und zumindest abschnittsweise eine mechanische Spannung im Gehäuse (5) zurückbleibt.

2. Feldgerät (1) nach Anspruch 1,
wobei das Gehäuse (5) eine insbesondere kaltumgeformte erste Gehäuseformhälfte (51) und eine insbesondere kaltumgeformte zweite Gehäuseformhälfte (52) umfasst,
wobei die erste Gehäuseformhälfte (51) und die zweite Gehäuseformhälfte (52) diametral angeordnet sind und miteinander befestigt sind.

3. Feldgerät (1) nach dem vorhergehenden Anspruch,
wobei die erste Gehäuseformhälfte (51) und die zweite Gehäuseformteilhälfte (52) jeweils einen zweiten Randabschnitt (62) aufweisen,
wobei die zweiten Randabschnitte (62) zumindest abschnittsweise miteinander in direktem Kontakt stehen,
wobei die Randabschnitte (61, 62) zumindest in einem Querschnitt durch das Feldgerät (1) jeweils eine zweite Randabschnittslängsachse B aufweisen, welche eine Mittelebene mit einem Winkel β schneidet,
wobei der Winkel β ein Winkelmaß von 1° bis 10° aufweist,
wobei die Mittelebene durch eine Längsachse des Messrohres (8) und einer senkrecht dazu verlaufenden Querachse X aufgespannt ist,
wobei die Mittelebene durch mindestens einen Kontaktpunkt der zweiten Randabschnitte (62) verläuft.

4. Feldgerät (1) nach Anspruch 2 und/oder einem davon abhängigen Anspruch,
wobei die erste Gehäuseformteilhälfte (51) im zweiten Randabschnitt (62) mindestens eine Biegelasche (53) zum Bilden einer formschlüssigen Verbindung mit der zweiten Gehäuseformteilhälfte (52) aufweist,
wobei die mindestens eine Biegelasche (53) umgebogen ist und mit dem zweiten Randabschnitt (62) der in Kontakt stehenden zweiten Gehäuseformteilhälfte (52) in Wirkung steht.

5. Feldgerät (1) nach Anspruch 2 und/oder einem davon abhängigen Anspruch,
wobei der zweite Randabschnitt (62) der ersten Gehäuseformteilhälfte (51) eine zumindest abschnittsweise umlaufende Falz (54) zum Begrenzen einer Verschiebung der zweiten Gehäuseformteilhälfte (52) in eine Längsrichtung und/oder eine Querrichtung des Messrohres (8) aufweist,
wobei die Falz (54) in eine Ausnehmung im zweiten Randabschnitt (62) der zweiten Gehäuseformteilhälfte (52) greift.

6. Feldgerät (1) nach dem vorhergehenden Anspruch,
wobei die mindestens eine Biegelasche (53) monolithisch mit der Falz (54) verbunden ist.

7. Feldgerät (1) nach mindestens einem der vorhergehenden Ansprüche,
wobei das Gehäuse (5) an der inneren Gehäusemantelfläche (24) eine Sicke (56) zum Versteifen der Gehäusewandung (47) aufweist,
wobei zumindest abschnittsweise ein Dichtmittel (57) in der Sicke (56) angeordnet ist.

8. Feldgerät (1) nach mindestens einem der vorhergehenden Ansprüche,
wobei die Messanordnung (3) eine Vorrichtung (10) zum Erzeugen eines das Messrohr (8) durchdringenden Magnetfeldes und mindestens zwei Messelektroden zum Ermitteln einer im Medium induzierten Messspannung aufweist,
wobei die Vorrichtung (10) zum Erzeugen des Magnetfeldes und die mindestens zwei Messelektroden zumindest teilweise an der äußeren Mantelfläche (58) des Messrohres angeordnet sind.

## Claims

1. An automation technology field device (1), comprising:
• A measuring tube (8) for conducting a flowable medium,
• a measurement arrangement (3) for determining a physical and/or chemical measured variable of the medium,
wherein the measurement arrangement (3) is at least partially arranged on the measuring tube (8),
• a housing (5) for housing at least one electronic component (4) for operating the measurement arrangement (3), regulating a control variable of the measurement arrangement (3), determining a measured value for the measured variable, and/or analyzing the measured variable,
wherein the housing (5) is arranged on an outer lateral surface(58) of the measuring tube (8) and at least partially covers the measurement arrangement (3),
wherein the housing (5) has a housing wall (47) which, together with the outer lateral surface (58) of the measuring tube (8), delimits a housing interior (48), wherein the housing wall (47) has a first edge section (61) which is in direct contact with the outer lateral surface (58) of the measuring tube (8) at least in sections,
wherein the first edge section (61) is bent away from the housing interior (48) at least in sections,
wherein the first edge section (61) is not bent,
**characterized in that** at least the first edge section (61) has a force-fit connection with the measuring tube (8),
wherein the first edge section (61) has a first edge section longitudinal axis A at least in a longitudinal section through the field device (1), which intersects the outer lateral surface (58) of the measuring tube (8) at an angle α, wherein α has an angular dimension between 1° and 10°,
and wherein the housing (5) is installed on and attached to the measuring tube (8) in such a way that the first edge section (61) is deformed as a result and stress remains in at least some sections of the housing (5).

2. The field device (1) as claimed in claim 1,
wherein the housing (5) comprises an, in particular cold-formed, first half of the housing molded part (51) and an, in particular cold-formed, second half of the housing molded part (52),
wherein the first half of the housing molded part (51) and the second half of the housing molded part (52) are diametrically arranged and attached to each other.

3. The field device (1) as claimed in the preceding claim,
wherein the first half of the housing molded part (51) and the second half of the housing molded part (52) each have a second edge section (62),
wherein the second edge sections (62) are in direct contact with each other at least in sections,
wherein the edge sections (61, 62) each have a second edge section longitudinal axis B at least in a cross-section through the field device (1), which intersects a center pane at an angle*β*,
wherein the angle β has an angular dimension from 1° to 10°,
wherein the center pane is formed by a longitudinal axis of the measuring tube (8) and a transverse axis X running perpendicular thereto,
wherein the center pane extends through at least one contact point of the second edge sections (62).

4. The field device (1) as claimed in claim 2 and/or a dependent claim,
wherein the first half of the housing molded part (51) has in the second edge section (62) at least one formed sheet (53) for forming a force-fit connection with the second half of the housing molded part (52),
wherein the at least one formed sheet (53) is bent over and is connected to the second edge section (62) of the second half of the housing molded part (52) that is in contact.

5. The field device (1) as claimed in claim 2 and/or a dependent claim,
wherein the second edge section (62) of the first half of the housing molded part (51) has a folded edge (54) which surrounds at least some sections for limiting a movement of the second half of the housing molded part (52) in a longitudinal direction and/or a transverse direction of the measuring tube (8),
wherein the folded edge (54) engages in a recess in the second edge section (62) of the second half of the housing molded part (52).

6. The field device (1) as claimed in the preceding claim,
wherein the at least one formed sheet (53) is monolithically connected to the folded edge (54).

7. The field device (1) as claimed in at least one of the preceding claims,
wherein the housing (5) has beading (56) on the inner housing lateral surface (24) to reinforce the housing wall (47),
wherein a sealant (57) is arranged in at least some sections of the beading (56).

8. The field device (1) as claimed in at least one of the preceding claims,
wherein the measurement arrangement (3) has a device (10) for generating a magnetic field which penetrates the measuring tube (8) and at least two measuring electrodes for determining a measuring voltage induced in the medium,
wherein the device (10) for generating the magnetic field and the at least two measuring electrodes are at least partially arranged on the outer lateral surface (58) of the measuring tube.

## Revendications

1. Appareil de terrain de la technique d'automatisation, comprenant :
- un tube de mesure (8) destiné à guider un produit fluide,
- un ensemble de mesure (3) destiné à déterminer une grandeur de mesure physique et/ou chimique du produit,
l'ensemble de mesure (3) étant disposé au moins partiellement sur le tube de mesure (8),
- un boîtier (5) conçu pour loger au moins un composant électronique (4) destiné faire fonctionner l'ensemble de mesure (3), réguler une grandeur de régulation de l'ensemble de mesure (3), déterminer une valeur mesurée de la grandeur de mesure et/ou évaluer la grandeur de mesure,
le boîtier (5) étant disposé sur une surface d'enveloppe extérieure (58) du tube de mesure (8) et recouvrant au moins partiellement l'ensemble de mesure (3),
le boîtier (5) présentant une paroi de boîtier (47), laquelle délimite, avec la surface d'enveloppe extérieure (58) du tube de mesure (8), un intérieur de boîtier (48),
la paroi de boîtier (47) présentant un premier tronçon de bord (61) qui est, au moins par sections, en contact direct avec la surface d'enveloppe extérieure (58) du tube de mesure (8),
le premier tronçon de bord (61) étant courbé au moins par sections en s'éloignant de l'intérieur du boîtier (48),
le premier tronçon de bord (61) étant exempt de courbure,
**caractérisé en ce qu'**au moins le premier tronçon de bord (61) est serré par adhérence avec le tube de mesure (8),
le premier tronçon de bord (61) présentant, au moins dans une coupe longitudinale à travers l'appareil de terrain (1), un premier axe longitudinal de tronçon de bord A qui coupe la surface d'enveloppe extérieure (58) du tube de mesure (8) avec un angle α,
α présentant une mesure angulaire comprise entre 1° et 10°,
et le boîtier (5) étant monté et fixé sur le tube de mesure (8) de telle sorte que le premier tronçon de bord (61) est alors déformé et qu'une tension mécanique subsiste au moins par sections dans le boîtier (5).

2. Appareil de terrain (1) selon la revendication 1,
pour lequel le boîtier (5) comprend une première moitié de boîtier moulé (51), notamment formée à froid, et une deuxième moitié de boîtier moulé (52), notamment formée à froid,
la première moitié de boîtier moulé (51) et la deuxième moitié de boîtier moulé (52) étant disposées diamétralement et fixées l'une à l'autre.

3. Appareil de terrain (1) selon la revendication précédente,
pour lequel la première moitié de boîtier moulé (51) et la deuxième moitié de boîtier moulé (52) présentent chacune un deuxième tronçon de bord (62),
pour lequel les deuxièmes tronçons de bord (62) sont en contact direct l'un avec l'autre au moins par sections,
les tronçons de bord (61, 62) présentant chacun, au moins dans une section transversale à travers l'appareil de terrain (1), un deuxième axe longitudinal de tronçon de bord B, lequel axe coupe un plan médian avec un angle ß,
l'angle ß présentant une mesure angulaire de 1° à 10°,
le plan médian étant défini par un axe longitudinal du tube de mesure (8) et un axe transversal X s'étendant perpendiculairement audit tube de mesure,
le plan médian passant par au moins un point de contact des deuxièmes tronçons de bord (62).

4. Appareil de terrain (1) selon la revendication 2 et/ou une revendication en dépendant,
pour lequel la première moitié de boîtier moulé (51) présente dans le deuxième tronçon de bord (62) au moins une patte de pliage (53) pour former une liaison par complémentarité de forme avec la deuxième moitié de boîtier moulé (52),
au moins une patte de pliage (53) étant repliée et agissant avec le deuxième tronçon de bord (62) de la deuxième moitié de boîtier moulé (52) en contact.

5. Appareil de terrain (1) selon la revendication 2 et/ou une revendication en dépendant,
pour lequel le deuxième tronçon de bord (62) de la première moitié de boîtier moulé (51) présente un pli (54) périphérique au moins par sections pour limiter un déplacement de la deuxième moitié de boîtier moulé (52) dans une direction longitudinale et/ou une direction transversale du tube de mesure (8),
le pli (54) s'engageant dans un évidement dans le deuxième tronçon de bord (62) de la deuxième moitié de boîtier moulé (52).

6. Appareil de terrain (1) selon la revendication précédente,
pour lequel l'au moins une patte de pliage (53) est reliée de manière monolithique au pli (54).

7. Appareil de terrain (1) selon au moins l'une des revendications précédentes,
pour lequel le boîtier (5) présente sur la surface d'enveloppe intérieure de boîtier (24) une moulure (56) destinée à rigidifier la paroi de boîtier (47),
un moyen d'étanchéité (57) étant disposé au moins par sections dans la moulure (56).

8. Appareil de terrain (1) selon au moins l'une des revendications précédentes,
pour lequel l'ensemble de mesure (3) comprend un dispositif (10) destiné à générer un champ magnétique traversant le tube de mesure (8) et au moins deux électrodes de mesure destinées à déterminer une tension de mesure induite dans le produit,
le dispositif (10) destiné à générer le champ magnétique et les au moins deux électrodes de mesure étant disposés au moins partiellement sur la surface d'enveloppe extérieure (58) du tube de mesure.
